# EUROPEAN PATENT APPLICATION

(11) **EP 2 584 670 A1**
(43) Date of publication of application: **24.04.2013**
(21) Application number: 11185435.2
(22) Date of filing: 17.10.2011
(51) Int. Cl.: H02K 1/27, H02K 15/03

(54) **Magnet module for a rotor of a generator**

(71) Applicant: Siemens Aktiengesellschaft, 80333 München (DE)
(72) Inventor: Madsen, Anders Jakob, 7800 Skive (DK); Valbjoern, Jesper, 6000 Kolding (DK)

(57) **Abstract**

Magnet module (1) for a rotor of a generator, having at least one permanent magnet (2), wherein a magnetic flux conducting cover element (4) at least partially covering the top surface of the permanent magnet (2) is attached to the permanent magnet (2) by means of at least one holding means.

## Description

The invention relates to a magnet module for a rotor of a generator, having at least one permanent magnet.

The general setup of an electric generator includes a stator and a rotor with the rotor being rotatably supported relative to a stator. The stator comprises a stator yoke holding respective stator coils or stator windings, whereas the rotor comprises a rotor yoke holding respective permanent magnets. The permanent magnets may be provided as components of respective magnet modules being attached to the rotor yoke.

A decisive parameter for the operation of a generator is the air gap between the rotor and the stator. Generally, the electric output of a respective generator may be increased when the air gap is comparatively small. Adjustment of the air gap is usually done by reducing constructive tolerances at the stator and/or the rotor. Yet, especially when regarding large-scaled generators, the exact adjustment of the air gap, which is usually in the range of only a few millimetres, is challenging.

Hence, it is the object of the invention to provide a magnet module which contributes to an easy and exact adjustment of a reduced air gap between the stator and the rotor.

This is inventively achieved by a magnet module as initially specified, wherein a magnetic flux conducting cover element at least partially covering the top surface of the permanent magnet is attached to the permanent magnet by means of at least one holding means.

The inventive principle provides a magnet module, whereby the top surface of the permanent magnet, i. e. the surface of the permanent magnet usually being exposed to the air gap or usually facing the air gap when the magnet module is attached to the rotor yoke of a generator, is at least partially, preferably completely, covered by at least one respective cover element. Hence, the inventive magnet module has a respective cover element on top of a respective permanent magnet, i. e. the cover element is directly facing the air gap in comparison to known magnet modules having the permanent magnet directly facing the air gap.

The cover element has magnetic flux conducting properties, i. e. is made of a magnetic flux conducting material. The cover element is preferably made of a magnetic or magnetisable material, preferably a magnetic or magnetisable metal such as ferritic steel for instance.

In such a manner, the cover element contributes to a reduction of the air gap leading to an increase in efficiency of the generator since the cover element is part of the magnetic circuit between the rotor and the stator. Aside, a reduction of the air gap allows a reduction of the amount of costly permanent magnet material such as NdFeB for instance. It may also be possible to replace a certain amount of permanent magnet material by the cover element due to its magnetic flux conducting properties.

Furthermore, the cover element provides mechanical protection against mechanical damage of the permanent magnet due to shock, vibration, or the like. Particularly, the cover element serves as a mechanical protection against impact of foreign objects. Furthermore, the cover element may at least partially shield the permanent magnet from corrosive fluids, i.e. protect the permanent magnet from corrosion. This is of special importance due to the fact that the permanent magnet material is rather sensitive, prone to corrosion, and brittle.

Attachment or connection of the cover element and the permanent magnet is provided by a respective holding means. The holding means provides a mechanically stable and firm connection between the cover element and the permanent magnet, i. e. holding the cover element disposed on the top surface of the permanent magnet safely in place, position, and orientation respectively. The connection of the cover element and the permanent magnet may detachable or non-detachable.

The holding means may be disposed on a base plate and may extend along at least one side edge of the permanent magnet towards the cover element, whereby the holding means at least partially overlaps the side edge of the cover element. Since the permanent magnet is usually a cuboid component having a rectangular or at least essentially rectangular cross-section, the permanent magnet may comprise four respective side edges or side faces, i. e. two respective side edges at the long side and two respective side edges at the short side (face side). Thereby, the holding means may be attached to the base plate by means of welded joints or adhesive joints for instance.

According to an exemplary embodiment, the holding means may be a holding clamp or a wall element extending off the base plate, with the holding clamp or the wall element at least partially covering at least one side edge of a permanent magnet and the cover element. The essential difference between the holding clamp and the wall element is their respective dimensions, whereby the holding clamp is comparatively short relative to the length or width of a respective side edge of the permanent magnet, whereas the wall element essentially has the same length or width or at least more than half of the length or width of the respective side edge of the permanent magnet. The wall element preferably completely covers a respective side edge or side face of the permanent magnet, whereas the holding clamp covers only a comparatively small portion of a respective side edge or side face of the permanent magnet.

Both the inventive holding clamp and the inventive wall element extend off the respective base plate towards the cover element. Preferably, both the holding clamp and the wall element overlap the cover element, i. e. the top surface of the cover element.

It is also thinkable that respective holding means in the shape of holding clamps extend along the interface portion of the permanent magnet and the cover element partially overlapping both a respective side edge of the permanent magnet and a respective side edge of the cover element in exceptional cases. According to this arrangement, the holding means essentially perpendicularly extends relative to the aforementioned embodiment of the respective holding means extending towards the cover element.

At least one respective holding clamp or at least one respective wall element may be provided at at least two opposing side edges of the permanent magnet. Hence, when regarding respective holding means in the shape of wall elements, the wall elements may cover respective opposing side edges or side faces of the permanent magnet.

It is also possible that at least one respective holding clamp or at least one respective wall element is provided at more than two, preferably all, side edges of the permanent magnet. Hence, when regarding respective holding means in the shape of wall elements, the wall elements may completely encase or enclose the permanent magnet, i. e. all respective side edges or side faces of the permanent magnet may be covered by respective wall elements.

The free end of a respective holding clamp or wall element is preferably bent so as to build a flange portion at least partially overlapping the side edge of the cover element. Thus, the cover element is safely held in place by a form and/or force closure which is provided by a respective overlap of the flanged free end of the holding clamp or wall element over the side edge of the cover element. The mentioned form and/or force closure may be detachable or non-detachable.

The holding means in the shape of the holding clamp or the wall element is preferably made of a non-magnetic or non-magnetisable material, particularly austenitic steel. Hence, respective holding clamps or wall elements do not affect the magnetic behaviour of the permanent magnet as well as the cover element. Aside, respective holding clamps or wall elements do not "stick" to the permanent magnet or cover element due to magnetic interaction which would be of disadvantage regarding their handling for instance.

Additionally or alternatively, the holding means may be a magnetic flux conducting adhesive. Hence, the cover element may merely be adhered to the top surface of the permanent magnet alternatively or in addition to the provision of respective holding means in the shape of respective holding clamps or wall elements. Hence, it may be possible that holding means in the shape of respective holding clamps or wall elements are not required when the respective adhesive provides a sufficiently stable attachment of the cover element on the permanent magnet.

It may be of advantage when the permanent magnet is at least partially coated by an anti-corrosive coating protecting the permanent magnet from corrosion. In such a manner, the permanent magnet is provided with protection against humidity or generally corrosive media. Further components of the inventive magnet module may also be at least partially provided with a respective anti-corrosive coating.

The invention also relates to a generator, particularly for a wind turbine. The generator has a rotor and a stator, whereby the rotor comprises a number of magnet modules as specified above.

Further, the invention relates to a tool assembly for manufacturing a magnet module as specified above, the tool assembly comprising a base portion and a connecting tool being movably supported relative to the base portion. The connecting tool has a holding tool for temporarily holding the cover element on the permanent magnet and a bending tool for bending the free end of a holding means in the shape of a holding clamp or a wall element so as to build a flange portion overlapping the side edge of a cover element, whereby the bending tool is movably supported relative to the holding tool.

The inventive tool assembly may be deemed as a combined clamping/flanging tool, i. e. it is able to provide a respective form and/or force closure between the free ends of the holding means in the shape of holding clamps or wall elements and the cover element in that the respective free ends of the holding means are bent so as to build respective flange portions overlapping the side edges of the cover element. In such a manner, the inventive tool assembly allows an easy manufacturing of respective magnet modules with holding means in the shape of respective holding clamps or wall elements.

According to a favourable embodiment of the inventive tool assembly, the bending tool comprises a cross-sectional rectangular reception portion for receiving the holding tool, which holding tool protrudes from the receiving portion when not holding the cover element and is received in the receiving portion against a reset force when moved against the cover element under application of a holding force. Thereby, the reset force may be provided by a hydraulic means or a pneumatic means or a spring means, particularly a compression spring.

It is preferred that the holding tool comprises a forming outer contour corresponding to the shape of the top surface of the permanent magnet. In such a manner, the holding tool is able to shape the cover element according to a desired shape which essentially corresponds to the shape of the top surface of the permanent magnet. In such a manner, the holding tool has two functionalities, i. e. holding the cover element safely in place and further shaping the cover element to a desired shape.

The invention also relates to a method for manufacturing a magnet module as specified above. The method comprises the steps of:
- providing a base plate,
- attaching at least one permanent magnet to the base plate,
- at least partially applying at least one holding means in the shape of a magnetic flux conducting adhesive to the top surface of the permanent magnet and connecting at least one cover element with the holding means on the top surface of the permanent magnet, and/or
- placing at least one cover element on top of the permanent magnet and connecting the cover element and the permanent magnet by means of at least one holding means in the shape of a holding clamp or a wall element by bending the free end of the holding clamp or the wall element so as to build a flange portion at least partially overlapping the side edge of the cover element.

The inventive method begins with providing a base plate and attaching at least one permanent magnet to the base plate. A holding means in the shape of a magnetic flux conducting adhesive may be at least partially applied to the top surface of the permanent magnet and at least one cover element is connected with or adhered to the holding means in the shape of the respective adhesive so that a mechanically stable adhesive joint is built between the permanent magnet and the cover element.

Additionally or alternatively a respective cover element is placed on the top surface of the permanent magnet, whereby the cover element and the permanent magnet is connected by means of at least one holding means in the shape of a holding clamp or a wall element. The connection of the cover element and the permanent magnet is provided by bending the free end of the holding clamp or the wall element so as to build a flange portion at least partially overlapping the side edge of the cover element in terms of a form and/or force closure. The holding clamp or the wall element may be attached to the base plate by means of welding or adhering for instance.

In the following, the invention is described in detail as reference is made to the principle figures, whereby:
- fig. 1: shows a perspective view of an inventive magnet module according to an exemplary embodiment of the invention;
- fig. 2: shows a cross-sectionally cut view of fig. 1;
- fig. 3: shows a perspective view of an inventive magnet module according to a further exemplary embodiment of the invention;
- fig. 4: shows a cross-sectionally cut view of fig. 3;
- fig. 5: shows a perspective view of an inventive magnet module according to a further exemplary embodiment of the invention;
- fig. 6: shows a perspective view of an inventive magnet module according to a further exemplary embodiment of the invention; and
- fig. 7 - fig. 11: show the steps of the inventive method of manufacturing an inventive magnet module using an inventive tool assembly for manufacturing an inventive magnet module.

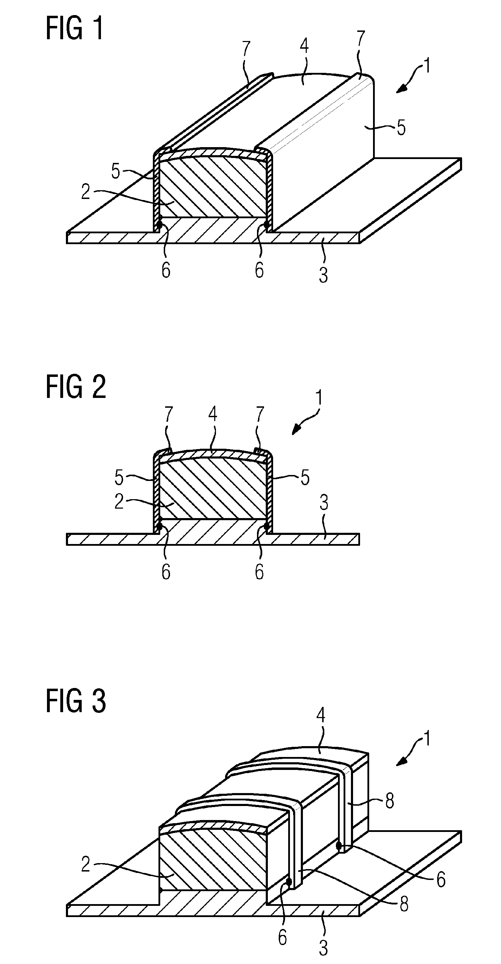

Fig. 1 shows a perspective view of an inventive magnet module 1 according to an exemplary embodiment of the invention.

Fig. 2 shows a respective cross-sectionally cut view of fig. 1. The inventive magnet module 1 is built as a component of a rotor of a generator of a wind turbine. Thereby, a respective magnet module 1 is to be attached to the rotor yoke of the rotor.

The inventive magnet module 1 comprises a permanent magnet 2 such as a neodymium permanent magnet (NdFeB permanent magnet) attached to a base plate 3. A cover element 4 made of a magnetic flux conducting material is disposed on the top surface of the permanent magnet 2. The cover element 4 is safely held in place by a holding means in the shape of respective wall elements 5 extending along respective opposing side edges or side faces of the permanent magnet 2 and towards the cover element 4. The wall elements 5 are attached to the base plate 3 by a welded joint 6. The free ends of the wall elements 5 are provided as flange portions 7, i. e. are bent so as to firmly hold the cover element 4 on top of the permanent magnet 2.

The wall elements 5 are made of a non-magnetic or non-magnetisable material such as austenitic steel. The cover element 4 is made of a magnetic material such as ferritic steel. Hence, the cover element 4 may be a part of the magnetic circuit of a generator. It is also possible to have respective wall elements 5 disposed at all side edges or side faces of the permanent magnet 2, i. e. in this case respective wall elements 5 would completely encase the permanent magnet 2 since each side edge of the permanent magnet 2 would be covered with a respective wall element 5.

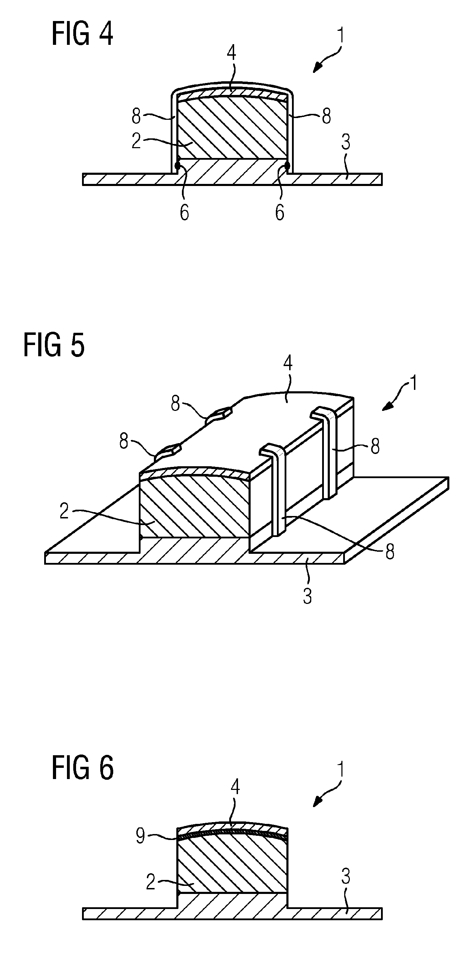

Fig. 3 shows a perspective view of an inventive magnet module 1 according to a further exemplary embodiment of the invention. Fig. 4 shows a cross-sectionally cut view of fig. 3. The essential difference between the embodiments of the inventive magnet modules 1 according to fig. 1, 2 and 3, 4 lie in the shape of the holding means which is a holding clamp 8 in fig. 3, 4 and not a respective wall element 5 as shown in fig. 1, 2.

The holding clamps 8 are attached to the base plate 3 and extend towards the cover element 4. Thereby, a respective holding clamp 8 completely overlaps the permanent magnet 2 and the cover element 4 disposed on the top surface of the permanent magnet 2. A respective holding clamp 8 is attached to the base plate 3 by means of welded joint 6. The holding clamp 8 is made of a non-magnetic material such as austenitic steel.

Fig. 5 shows a perspective view of an inventive magnet module 1 according to a further exemplary embodiment of the invention. In comparison to the embodiment of fig. 3, 4 , the respective holding clamps 8 do not entirely, but only partially overlap the cover element 4. Yet, a firm attachment of the cover element 4 on the top surface of the permanent magnet 2 is realised.

Fig. 6 shows a cross-sectionally cut view of an inventive magnet module 1 according to a further exemplary embodiment of the invention. In this case, a connection between the permanent magnet 2 and the cover element 4 is realized by a holding means in the shape of a magnetic flux conducting adhesive 9. As is discernible, the adhesive 9 is applied to the top surface of the permanent magnet 2 and the cover element 4 is directly positioned on the layer of adhesive 9 so as to build an adhesive joint.

In either case, the inventive principle of providing a respective magnetic flux conducting cover element 4 on the top surface of the permanent magnet 2 allows a reduction of the air gap between a rotor comprising respective magnet modules 1 and a stator of a generator. This leads to an increase of efficiency of the generator. Aside, permanent magnet material may be reduced.

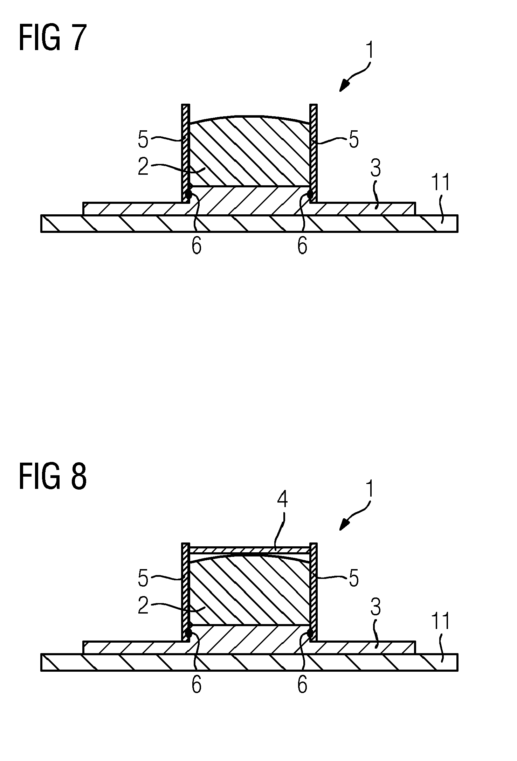

Fig. 7 - 11 depict the steps of the inventive method of manufacturing an inventive magnet module using an inventive tool assembly 10. The tool assembly 10 may be deemed as a combined clamping and flanging tool. Fig. 7 shows that a base plate 3 of the magnet module 1 to be manufactured is positioned on a base portion 11 of the tool assembly 10. Respective wall elements 5 are attached to the base plate 3 by means of welded joints 6. A permanent magnet 2 is disposed between the respective wall elements 5 on the base plate 3.

As is discernible from fig. 8, a respective cover element 4 is positioned on the top surface of the permanent magnet 2.

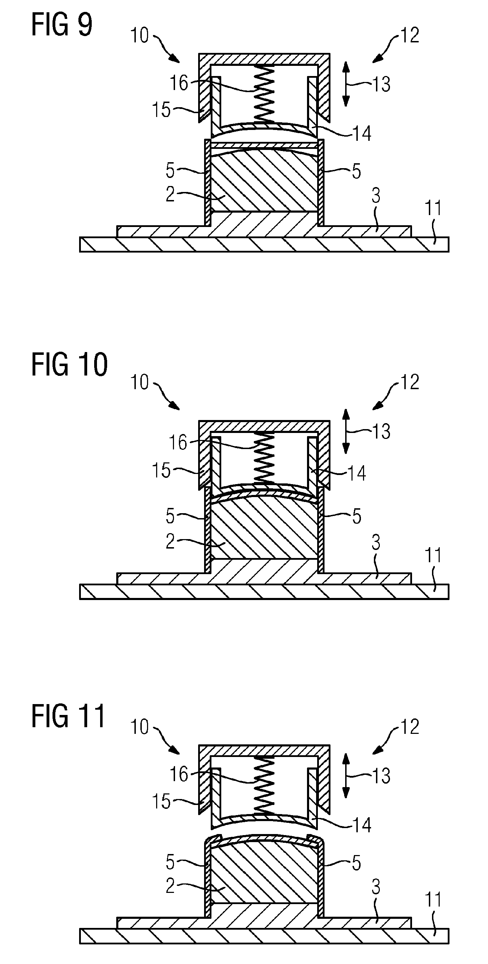

Fig. 9 shows a connecting tool 12 as a part of the inventive tool assembly 10 which connecting tool is movably supported relative to the base portion 11 (cf. arrows 13). As is discernible, the connecting tool 12 comprises a holding tool 14 movably supported within a cross-sectionally rectangular shaped portion of the bending tool 15. The outer contour of the holding tool 14 corresponds to the shape of the permanent magnet 2 so that the outer contour of the holding tool 14 is capable of forming the cover element 4 according to the shape of the top surface of the permanent magnet 2.

The holding tool 14 protrudes from the receiving portion within the bending tool 15 in fig. 9. In fig. 10, i. e. the connecting tool 12 is moved downwards (cf. arrows 13) so that the holding tool 14 applies a respective holding force on the cover element 4, thereby shaping the cover element 4 according to the shape of the top surface of the permanent magnet 2. Thereby, a reset force is applied due to the compression of a spring means 16 disposed between the holding tool 14 and the bending tool 15.

The connecting tool 12 is further moved downwards under the application of additional force so that the forming free ends of the bending tool 15 bend the free ends of the wall element 5 so as to build the flange portions 7 (cf. fig. 11). The respective magnet module 1 is completely manufactured in fig. 11, i. e. the connecting tool 12 is moved upwards (cf. arrows 13) so that the magnet module 1 can be taken out from the tool assembly 10. The same principle is feasible with respective holding clamps 8.

Although the present invention has been described in detail with reference to the preferred embodiment, the present invention is not limited by the disclosed examples from which the skilled person is able to derive other variations without departing from the scope of the invention.

## Claims

1. Magnet module (1) for a rotor of a generator, having at least one permanent magnet (2), wherein a magnetic flux conducting cover element (4) at least partially covering the top surface of the permanent magnet (2) is attached to the permanent magnet (2) by means of at least one holding means.

2. Magnet module according to claim 1, wherein the holding means is disposed on a base plate (3) and extends along at least one side edge of the permanent magnet (2) towards the cover element (4), whereby the holding means at least partially overlaps the side edge of the cover element (4).

3. Magnet module according to claim 2, wherein the holding means is a holding clamp (8) or a wall element (5) extending off the base plate (3), with the wall element (5) at least partially covering at least one side edge of the permanent magnet (2) and the cover element (4).

4. Magnet module according to claim 3, wherein at least one respective holding clamp (8) or at least one respective wall element (5) is provided at at least two opposing side edges of the permanent magnet (2).

5. Magnet module according to claim 3, wherein at least one respective holding clamp (8) or at least one respective wall element (5) is provided at more than two, preferably all, side edges of the permanent magnet (2).

6. Magnet module according to one of the claims 2 to 5, wherein the free end of a respective holding clamp (8) or wall element (5) is bent so as to build a flange portion (7) at least partially overlapping the side edge of the cover element (4).

7. Magnet module according to one of the claims 2 to 6, wherein the holding means in the shape of the holding clamp (8) or the wall element (5) is made of a non-magnetic or non-magnetisable material, particularly austenitic steel.

8. Magnet module according to one of the preceding claims, wherein the holding means is a magnetic flux conducting adhesive (9).

9. Magnet module according to one of the preceding claims, wherein the cover element (4) is made of magnetic or magnetisable metal, particularly ferritic steel.

10. Generator, particularly for a wind turbine, having a rotor and a stator, whereby the rotor comprises a number of magnet modules (1) according to one of the preceding claims.

11. Tool assembly (10) for manufacturing a magnet module (1) according to one of the preceding claims, the tool assembly (10) comprising a base portion (11) and a connecting tool (12) being movably supported relative to the base portion (11), the connecting tool (12) having a holding tool (14) for temporarily holding the cover element (4) on the permanent magnet (2) and a bending tool (15) for bending the free end of a holding means in the shape of a holding clamp (8) or a wall element (5) so as to build a flange portion (7) overlapping the side edge of the cover element (4), whereby the bending tool (15) is movably supported relative to the holding tool (14).

12. Tool assembly according to claim 11, wherein the bending tool (15) comprises a cross-sectionally rectangular reception portion for receiving the holding tool (14), which holding tool (14) protrudes from the receiving portion when not holding the cover element (4) and is received in the receiving portion against a reset force when moved against the cover element (4) under application of a holding force.

13. Tool assembly according to claim 11 or 12, wherein the reset force is provided by a hydraulic means or a pneumatic means or a spring means (16), particularly a compression spring.

14. Tool assembly according to one of the claims 11 to 13, wherein the holding tool (14) comprises a forming outer contour corresponding to the shape of the top surface of the permanent magnet (2).

15. Method for manufacturing a magnet module according to one of the preceding claims, comprising the steps of:
- providing a base plate (3),
- attaching at least one permanent magnet (2) to the base plate (3),
- at least partially applying at least one holding means in the shape of a magnetic flux conducting adhesive (9) to the top surface of the permanent magnet (2) and connecting at least one cover element (4) with the holding means on the top surface of the permanent magnet (2), and/or
- placing at least one cover element (4) on the top surface of the permanent magnet (2) and connecting the cover element (4) and the permanent magnet (2) by means of at least one holding means in the shape of a holding clamp (8) or a wall element (5) by bending the free end of the holding clamp (8) or the wall element (5) so as to build a flange portion (7) at least partially overlapping the side edge of the cover element (4).
